# EUROPÄISCHE PATENTSCHRIFT

(11) **EP 1 898 602 B1**
(45) Veröffentlichungstag und Bekanntmachung des Hinweises auf die Patenterteilung: **01.05.2013**
(21) Anmeldenummer: 07017480.0
(22) Anmeldetag: 06.09.2007
(51) Int. Cl.: H04L 29/12, H04L 29/06

(54) **Verfahren, Gateway, Portal und Endgerät zum Herstellen einer Kommunikationsverbindung zwischen unterschiedlichen Kommunikationsnetzen**
Method, gateway, portal and terminal device for creating a communications connection between different communications networks
Procédé, passerelle, portail et terminal destinés à la fabrication d'une liaison de communication entre différents réseaux de communication

(30) Priorität: 06.09.2006 DE 102006041858
(43) Veröffentlichungstag der Anmeldung: 12.03.2008
(73) Patentinhaber: Vodafone Holding GmbH, 40213 Düsseldorf (DE)
(72) Erfinder: Alger, Michael, 85540 Haar (DE)
(74) Vertreter: Müller, Thomas

(56) Entgegenhaltungen:
- WO-A-2005/117397
- DE-U1- 20 121 327

## Beschreibung

Die vorliegende Erfindung betrifft zunächst ein Verfahren zum Herstellen einer Kommunikationsverbindung zwischen einem ersten Kommunikationsnetz und einem zum ersten Kommunikationsnetz unterschiedlichen zweiten Kommunikationsnetz gemäß dem Oberbegriff von Patentanspruch 1. Weiterhin betrifft die Erfindung ein Gateway zum Herstellen einer Kommunikationsverbindung zwischen einem ersten Kommunikationsnetz und einem zum ersten Kommunikationsnetz unterschiedlichen zweiten Kommunikationsnetz gemäß dem Oberbegriff von Patentanspruch 4.

Mit zunehmender Mobilität der Kommunikationsmittel, und mit zunehmender Anzahl unterschiedlicher Kommunikationsnetze wird es immer bedeutsamer, dass Teilnehmer, die in einem ersten Kommunikationsnetz registriert sind, Kommunikationsverbindungen auch in zum ersten Kommunikationsnetz unterschiedliche zweite Kommunikationsnetze aufbauen können. Dies ist jedoch meist nicht problemlos möglich, da die verschiedenen Kommunikationsnetze unterschiedlich aufgebaut und konfiguriert, und somit in der Regel zueinander nicht kompatibel sind. Aus diesem Grund ist es nicht ohne weiteres möglich, dass ein in einem ersten Kommunikationsnetz registrierter Teilnehmer direkt mit einem in einem zweiten, zum ersten Kommunikationsnetz unterschiedlichen Kommunikationsnetz registrierten Teilnehmer kommunizieren kann, ohne dass spezielle Hilfsmittel eingesetzt werden müssen.

Bei einem solchen Hilfsmittel handelt es sich beispielsweise um ein so genanntes Gateway. Unter einem Gateway ist generell ein Rechner oder eine Schnittstelle zu verstehen, der/die Informationen, Daten, Signale und dergleichen zwischen zwei verschiedenen Kommunikationsnetztypen vermittelt. Es ist bereits bekannt, derartige Gateways zu verwenden, die zur Herstellung der Verbindung zwischen den verschiedenen Kommunikationsnetzen dienen und die an der Netzgrenze zwischen den Kommunikationsnetzen angesiedelt sind.

Die bisher vorherrschende Ausgangslage soll anhand eines Beispiels erläutert werden. Dabei soll es sich bei dem ersten Kommunikationsnetz um ein Telekommunikationsnetz, beispielsweise ein Mobilfunknetz, handeln, während das zweite Kommunikationsnetz in Form eines Compuernetzes, beispielsweise eines Netzes zur Durchführung von Voice-over-IP (VolP)-Kommunikation, ausgebildet ist.

Telefone signallisieren Anrufe zu B-Teilnehmern mit Telefonnummern aus den Ziffern 0-9 und einigen wenigen Sonderzeichen. Teilnehmer in internet-basierten Netzen, beispielsweise die Voice-over-IP-Teilnehmer, werden jedoch nicht durch eine Telefonnummer adressiert, sondern durch aphanumerische Zeichenketten. Sie sind also von einem herkömmlichen Telefon aus ohne besondere Maßnahmen nicht zu erreichen.

Um dies dennoch zu ermöglichen, ist es im allgemeinen Stand der Technik beispielsweise bekannt, per spezieller Software, die auf dem Telefon installiert ist und vom Benutzer separat aufgerufen werden muss, über eine geeignete Nutzerschnittstelle den zur Signalisierung erforderlichen Text einzugeben.

Anschließend wird eine Datenverbindung zu einem Gateway aufgebaut und der Text übertragen.

Es gibt auch die Möglichkeit, Ziffern auf Buchstaben abzubilden. So sind auf der Tastatur eines modernen Telefons jeder Ziffer drei bis vier Buchstaben zugeordnet und durch mehrfaches Drücken auszuwählen, zum Beispiel 2 = a, 22 = b, 222 = c. Entsprechend wäre "333 777 444 8 9999" = "Fritz". Ein solches Verfahren wird beispielsweise für die Texteingabe bei Mobiltelefonen genutzt. Nachteil bei dieser bekannten Lösung ist jedoch, dass die Zuordnung erst durch die Pausen eindeutig wird.

In der DE 201 21 327 U1 ist eine Vorrichtung zum Erfassen und Abspeichern von URLs und/oder elektronischen Postadressen beschrieben. Dazu wird eine Kennung zu einer Zentralen Datenbank übertragen. In der Datenbank befinden sich Kennungen, die mit URLs und/oder elektronischen Postadressen verknüpft sind. Die eingehende Kennung wird mit den in der Datenbank befindlichen Kennungen verglichen. Bei Übereinstimmung wird die entsprechende URL und/oder elektronische Postadresse ausgelesen. Eine in eine ähnliche Richtung abzielende Lösung ist in der WO 2005/117397 A1 beschrieben.

Ausgehend vom genannten Stand der Technik liegt der vorliegenden Erfindung die Aufgabe zugrunde, ein Verfahren, sowie ein Gateway, der eingangs genannten Art derart weiterzubilden, dass die beschriebenen Nachteile vermieden werden können. Insbesondere soll es auf einfache Weise und ohne besondere Hilfsmittel oder Maßnahmen ermöglicht werden, dass eine Kommunikationsverbindung zwischen unterschiedlichen Kommunikationsnetzen, beziehungsweise zwischen Endgeräten in unterschiedlichen Kommunikationsnetzen, hergestellt werden kann.

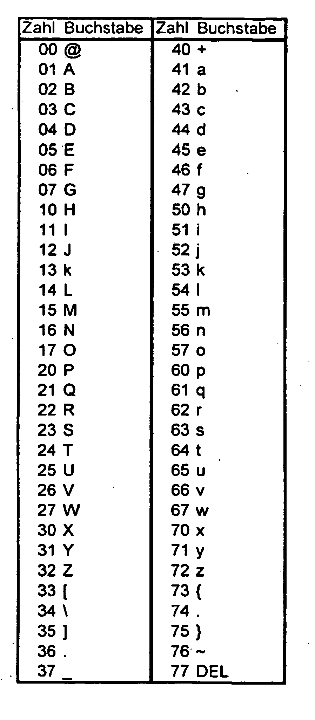

Diese Aufgabe wird erfindungsgemäß gelöst durch das Verfahren mit den Merkmalen gemäß dem unabjängigen Patentanspruch 1 sowie das Gateway mit den Merkmalen gemäß dem unabhängigen Patentanspruch 4. Weitere Merkmale und Details der Erfindung ergeben sich aus den Unteransprüchen, der Beschreibung sowie der Zeichnung. Dabei gelten Merkmale und Details, die im Zusammenhang mit dem erfindungsgemäßen Verfahren beschrieben sind, selbstverständlich auch im Zusammenhang mit dem erfindungsgemäßen Gateway, und umgekehrt.

Die verschiedenen Aspekte der vorliegenden Erfindung weisen einen gemeinsamen erfinderischen Grundgedanken auf, nämlich dass mit diesen Lösungen erreicht wird, dass Kommunikationsverbindungen zwischen unterschiedlichen Kommunikationsnetzen hergestellt werden können, wie in den jeweiligen Oberbegriffen der unabhängigen Patentanspruche genannt ist. Diese "Kompatibilität" wird erreicht, indem mittels geeigneter Maßnahmen Adresskennungen umgewandelt beziehungsweise transformiert werden. Die einzelnen Aspekte zeigen jeweils Möglichkeiten auf, wie dies realisiert werden kann. Mittels aller erfindungsgemäßen Lösungen wird es ermöglicht, dass Adresskennungen eines ersten Kommunikationsnetzes, die für dieses gültig sind, nicht jedoch für ein dazu unterschiedliches zweites Kommunikationsnetz, in für das zweite Kommunikationsnetz gültige Adresskennungen umgewandelt werden können. Erfindungsgemäß wird dies durch eine bestimmte Transformationsdatei erreicht, durch die Adresskennungen des ersten Kommunikationsnetzes automatisch in Adresskennungen für ein zweites Kommunikationsnetz transformiert werden.

Gemäß der vorliegenden Erfindung findet keine Zuordnung von bereits bekannten Zieladressen zu den Zielrufnummern statt, sondern die Zieladresse wird aus der Zielrufnummer transformiert. Die Transformation erfolgt durch eine Umwandlung von zumindest Bestandteilen der Adresskennung des ersten Kommunikationsnetzes in Adresskennungsbestandteile des zweiten Kommunikationsnetzes.

### Demgemäß stellt sich die vorliegende Erfindung wie folgt dar:

Gemäß einem ersten Aspekt der Erfindung wird ein Verfahren zum Herstellen einer Kommunikationsverbindung zwischen einem ersten Kommunikationsnetz und einem zum ersten Kommunikationsnetz unterschiedlichen zweiten Kommunikationsnetz mit den Merkmalen gemäß dem unabhängigen Patentanspruch 1 bereitgestellt, wobei an der Netzgrenze zwischen dem ersten und dem zweiten Kommunikationsnetz ein Gateway zur Herstellung der Verbindung zwischen den verschiedenen Kommunikationsnetzen vorgesehen ist.

Durch das erfindungsgemäße Verfahren wird es ermöglicht, eine Kommunikationsverbindung zwischen einem ersten Kommunikationsnetz und einem zum ersten Kommunikationsnetz unterschiedlichen zweiten Kommunikationsnetz herzustellen.

Zur Durchführung des Verfahrens ist vorgesehen, dass an der Netzgrenze zwischen dem ersten und dem zweiten Kommunikationsnetz ein wie weiter oben definiertes Gateway zur Herstellung der Verbindung zwischen den verschiedenen Kommunikationsnetzen vorgesehen ist. Dabei kann das Gateway jeweils Bestandteil des ersten oder zweiten Kommunikationsnetzes sein. Es ist auch denkbar, dass jedes Kommunikationsnetz über ein Gateway verfügt, wobei dann die beiden Gateways miteinander kommunizieren.

Das Verfahren ist erfindungsgemäß gekennzeichnet durch folgende, von dem Gateway durchgeführte Schritte:
Zunächst empfängt das Gateway eine Adresskennung aus dem ersten Kommunikationsnetz, wobei die Adresskennung in der für das erste Kommunikationsnetz typischen Weise aufgebaut ist. Wenn es sich bei dem ersten Kommunikationsnetz beispielsweise um ein Telekommunikationsnetz, etwa ein Mobilfunknetz, handelt, entspricht die Adresskennung einer Telefonnummer bestehend aus einer Abfolge von Ziffern.

In einem weiteren Schritt greift das Gateway auf eine Transformationsdatei zu, in der Adresskennungsbestandteilen des ersten Kommunikationsnetzes Adresskennungsbestandteile des zweiten Kommunikationsnetzes eindeutig zugeordnet sind. Dabei kann vorgesehen sein, dass die Transformationsdatei innerhalb des Gateways abgelegt ist. Alternativ ist auch denkbar, dass die Transformationsdatei zum Gateway extern vorliegt, und dass das Gateway im Bedarfsfall auf die Transformationsdatei zugreift. Bei der Transformationsdatei handelt es sich generell um eine Art Umwandlungsdatei. Einige nicht ausschließliche Beispiele für solche Transformationsdateien werden im weiteren Verlauf noch näher beschrieben.

Auf der Basis der Inhalte der Transformationsdatei, und damit anhand der Transformationsdatei, erfolgt im Gateway eine automatische Transformation (Umwandlung) von zumindest Bestandteilen der Adresskennung des ersten Kommunikationsnetzes in eine Adresskennung für das zweite Kommunikationsnetz.

Über die transformierte Adresskennung erfolgt schließlich die Herstellung der Kommunikationsverbindung zwischen den einzelnen Endgeräten.

Mit dem erfindungsgemäßen Verfahren ist es beispielsweise nunmehr möglich, eine alphanumerische Signalisierung nur mit Ziffern durchzuführen, wobei die Erfindung natürlich nicht auf diese eine konkrete Anwendungsform beschränkt ist. Insbesondere ist es mit dem erfindungsgemäßen Verfahren, ebenso wie mit dem erfindungsgemäßen Gateway auch, möglich, eine rein numerische Signalisierung in Telefonen zur Adressierung von alphanumerischen Adressen, beispielsweise von Voice-over-IP (VoIP)-Teilnehmern, zu nutzen. Wie dies im Einzelnen geschehen kann, wird im weiteren Verlauf der Beschreibung näher erläutert.

Erfindungsgemäß weist die Adresskennung aus dem ersten Kommunikationsnetz Adresskennungsbestandteile mit jeweils zweiziffrigen Zahlencodes, insbesondere jeweils zwei Ziffern aus dem Oktalsystem, auf. Ferner weist die Adresskennung aus dem zweiten Kommunikationsnetz Adresskennungsbestandteile in Form von Buchstaben und/oder Sonderzeichen auf.

Vorteilhaft kann vorgesehen sein, dass mit dem Verfahren eine Verbindung vom ersten Kommunikationsnetz zum zweiten Kommunikationsnetz und/oder eine Verbindung vom zweiten Kommunikationsnetz zum ersten Kommunikationsnetz hergestellt wird/werden. Das Verfahren ermöglicht somit, aus Sicht der Kommunikationsnetze, einen Kommunikationsaufbau entweder jeweils in einer Richtung (unidirektional), oder aber auch in beiden Richtungen (bidirektional).

Wie weiter oben schon erwähnt wurde, ist die Erfindung nicht auf bestimmte Typen von Kommunikationsnetzen beschränkt. Ebenso ist die Erfindung natürlich auch nicht auf eine bestimmte Anzahl von unterschiedlichen Kommunikationsnetzen beschränkt. So ist es natürlich ebenso möglich, das zwei oder mehr zweite Kommunikationsnetze vorgesehen sein können, zu denen ein Kommunikationsaufbau aus dem ersten Kommunikationsnetz (und optional natürlich auch umgekehrt) in der wie oben beschriebenen Weise aufgebaut werden kann.

Nachfolgend werden einige vorteilhafte Ausgestaltungen für verschiedene Kommunikationsnetze beschrieben. Erfindungsgemäß wird mit dem Verfahren eine Verbindung von einem Telekommunikationsnetz, insbesondere einem Mobilfunknetz, zu einem Computernetz und/oder eine Verbindung von einem Computernetz zu einem Telekommunikationsnetz, insbesondere einem Mobilfunknetz, hergestellt. Bei dem Computernetz kann es sich beispielsweise um ein Netz zur Durchführung einer VolP-Kommunikation handeln.

Ebenso ist die Erfindung natürlich auch nicht auf bestimmte Formen der Adresskennungen beschränkt. Diese ergeben sich vielmehr aus der Ausgestaltung des jeweiligen Kommunikationsnetzes. In einer vorteilhaften Ausgestaltung des Verfahrens kann eine numerische Adresskennung des ersten Kommunikationsnetzes in eine alphanumerische Adresskennung des zweiten Kommunikationsnetzes transformiert werden. Zu denken ist hier beispielsweise an die Transformation einer Telefonnummer in eine Adresskennung zur VolP-Kommunikation.

Sofern eine derartige Transformation durchgeführt wird, kann vorteilhaft vorgesehen sein, dass das Gateway eine aus zwei Bestandteilen bestehende numerische Adresskennung des ersten Kommunikationsnetzes empfängt, wobei ein Bestandteil eine Anwahlkennung für das Gateway und der andere Bestandteil spezifische Kenndaten zur Erreichung eines Teilnehmers des zweiten Kommunikationsnetzes umfasst, und dass das Gateway zur Herstellung der Kommunikationsverbindung die spezifischen Kenndaten transformiert. Bei dem ersten Bestandteil der Adresskennung kann es sich beispielsweise um eine Einwahlnummer zum/beim Gateway handeln.

Die grundsätzliche Funktionsweise und der allgemeine Ablauf des wie vorstehend beschriebenen Verfahrens wird nun anhand eines konkreten, jedoch nicht ausschließlichen Beispiels näher erläutert. Bei diesem Beispiel ist das erste Kommunikationsnetz in Form eines Telekommunikationsnetzes, insbesondere eines Mobilfunknetzes, ausgebildet, während das zweite Kommunikationsnetz in Form eines Computernetzes, insbesondere eines Netzes zur VoIP-Kommunikation, ausgebildet ist.

Herkömmliche Telefone können über die Nutzung des zum Telefonieren gedachten User-Interface (in der Regel die "Tastatur") nun auch alphanumerische Signalisierungsinformationen aufnehmen und weiterschicken, ohne dass dazu spezielle Mittel, beispielsweise spezielle Software, genutzt werden muss. Die Anrufe zu normalen Teilnehmeranschlüssen und die zu alphanumerisch adressierten Teilnehmern erfolgen über das gleiche Interface. Der Nutzer muss also nicht für seine VolP-Teilnehmer eine extra Software auf dem Telefon starten. Die Adresse des Teilnehmers muss nicht extra provisioniert werden Als Erweiterung ergibt sich für den Netzbetreiber, beziehungsweise den Gateway-Betreiber, die Möglichkeit, frei definierte Kommandos einzuführen, die über die Möglichkeiten der bisher bekannten ("#06#") hinaus gehen.

Die Adressierung eines Namens eines Teilnehmers im zweiten Kommunikationsnetz erfolgt über den Signalisierungskanal des Telefonnetzes (fest oder mobil). Die Tastatur nimmt zum Rufaufbau nur Ziffern an, sowie gegebenenfalls die Sonderzeichen # und *. Ein Rufaufbau zu einem Teilnehmer mit alphanumerischer Adresse statt Telefonnummer erfolgt über das Gateway an der Netzgrenze zum Computernetz. Das Gateway wird vorteilhaft über eine Kurzwahl (erster Bestandteil der Adresskennung) erreicht. Der Teilnehmername wird dann, daran angehängt, als Parameter übergeben.

Dazu wird eine vorab vereinbarte, eindeutige Zuordnung einer Ziffernfolge zu einer alphanumerischen Kette, beispielsweise einer Buchstabekette, verwendet. Diese Ziffernfolge wird vom Gateway gemäß der vereinbarten Transformationsdatei - beispielsweise einer bestimmten Tabelle - in eine Buchstabekette umgewandelt.

Die vordefinierte Transformationsdatei (Tabelle) transformiert auf eindeutige und reversible Weise, ohne (wie etwa beim SMS-Schreiben) auf das Sonderzeichen "Pause" angewiesen zu sein, die nachfolgenden Ziffern in die Adresse. Vom Gateway wird der Adressat dann über die bekannten Protokolle des Computernetzes, beispielsweise entsprechende VolP-Protokolle, erreicht.

Die lange Ziffernfolge kann nun ebenfalls im bekannten Telefonbuch des völlig normalen Telefons, etwa des Mobiltelefons, gespeichert werden. Der zugehörige Name für den Telefonbucheintrag ist vorzugsweise frei wählbar. Das Gateway bekommt bei Initiierung eines Anrufs einer Nummer die entsprechende Ziffernfolge und setzt diese in eine Internetadresse oder eine andere, alphanumerische Adresse, um.

Gemäß dem zweiten Aspekt der Erfindung wird ein Gateway zum Herstellen einer Kommunikationsverbindung zwischen einem ersten Kommunikationsnetz und einem zum ersten Kommunikationsnetz unterschiedlichen zweiten Kommunikationsnetz bereitgestellt mit den Merkmalen gemäß dem unabhängigen Patentanpruch 4 bereitgestellt.

Insbesondere weist das Gateway somit Mittel zur Durchführung des wie vorstehend beschriebenen erfindungsgemäßen Verfahrens auf. Zum Aufbau sowie zur Funktionsweise des Gateways wird zur Vermeidung von Wiederholungen deshalb auch auf die vorstehenden Ausführungen zu den Verfahren vollinhaltlich Bezug genommen und verwiesen.

Vorteilhaft kann das Gateway eine Analyseeinrichtung zum Analysieren der Adresskennung aufweisen, wobei ein Bestandteil der Adresskennung eine Anwahlkennung für das Gateway und der andere Bestandteil der Adresskennung spezifische Kenndaten zur Erreichung eines Teilnehmers des zweiten Kommunikationsnetzes umfasst. Die Analyseeinrichtung weist weiterhin Mittel zum Erkennen der Anwahlkennung oder der spezifischen Kenndaten auf. Die Mittel zum automatischen Transformieren sind dann vorteilhaft zum Transformieren der spezifischen Kenndaten in eine Adresskennung für das zweite Kommunikationsnetz anhand der Transformationsdatei ausgebildet.

Vorteilhaft kann das Gateway Bestandteil des ersten Kommunikationsnetzes, insbesondere eines Telekommunikationsnetzes, sein. Alternativ oder zusätzlich kann vorgesehen sein, dass das Gateway Bestandteil des zweiten Kommunikationsnetzes, insbesondere eines Computernetzes, ist.

In weiterer Ausgestaltung kann vorgesehen sein, dass die Transformationsdatei Bestandteil des Gateways ist. Ebenso ist natürlich auch möglich, dass die Transformationsdatei außerhalb (das heißt extern) vom Gateway vorgesehen ist, wobei das Gateway dann bei Bedarf auf diese Transformationsdatei zugreift.

Beschrieben wird weiterhin ein Portal zum Herstellen einer Kommunikationsverbindung zwischen einem Endgerät in einem ersten Kommunikationsnetz und einem Endgerät in einem zum ersten Kommunikationsnetz unterschiedlichen zweiten Kommunikationsnetz, das durch ein wie vorstehend beschriebenes erfindungsgemäßes Gateway gekennzeichnet ist. Zum Aufbau sowie zur Funktionsweise des Portals wird zur Vermeidung von Wiederholungen deshalb auch auf die vorstehenden Ausführungen zu dem Gateways, ebenso wie zu dem Verfahren, vollinhaltlich Bezug genommen und verwiesen.

In einem solchen Portal kann beispielsweise vorgesehen sein, dass die Transformationsdatei Bestandteil des Gateways ist, oder aber, dass das Rechenprogramm Bestandteil des Gateways ist. In anderer Ausgestaltung kann vorgesehen sein, dass die Transformationsdatei in einer vom Gateway unabhängigen Speichereinrichtung des Portals vorgesehen ist. Oder aber, dass das Rechenprogramm in einer vom Gateway unabhängigen Rechnereinheit des Portals vorgesehen ist.

Die Erfindung wird nun anhand eines Ausführungsbeispiels unter Bezugnahme auf die beiliegende Tabelle näher erläutert.

Die Tabelle zeigt ein Beispiel einer Code-Tabelle ohne Sonderzeichen. Bei dieser Code-Tabelle handelt es sich um die Transformationsdatei. Mittels der Transformationsdatei soll eine Kommunikationsverbindung zwischen einem Telekommunikationsnetz (dem ersten Kommunikationsnetz) und einem dazu unterschiedlichen Computernetz (dem zweiten Kommunikationsnetz) hergestellt werden. In der Transformationsdatei sind Bestandteile von Adresskennungen des Telekommunikationsnetzes (zweiziffrige Zahlencodes) Bestandteilen von Adresskennungen des Computemetzes (alphanumerische Bestandteile, nämlich Buchstaben und einige wenige Sonderzeichen) zugeordnet.

Im vorliegenden Beispiel werden nur 64 Zeichen genutzt. Diese werden nicht durch 2Byte codiert, sondern durch jeweils genau zwei Ziffern aus dem Okatalsystem, 0 - 7. Die Ziffern 8 und 9 können in einem solchen Fall Sonderbefehlen zur späteren Definition und Nutzung vorbehalten bleiben.

Im vorliegenden Beispiel habe das Gateway die vierstellige Einwahlnummer 2222.

Eine Adresse wie z.B. fredk@skype.net wird nun in folgender Weise in die Tastatur des Telefons getippt:
2222 46 62 45 44 53 00 63 53 71 60 45 74 56 45 64
f r e d k @ .....

Die Leerstellen dienen dabei nur der Lesbarkeit. Nach dem Aufbau des Calls zum Gateway (2222) werden die restlichen Ziffern als Menüeingaben interpretiert. Sie unterliegen daher nicht der Längenbeschränkung des SS7 Signalisierungssystems auf 16 Ziffern.

Die eingegebenen Zahlencodes werden durch Zugriff auf die Transformationsdatei in alphanumerische Adressbestandteile transformiert. Über die transformierte Adresskennung wird anschließend eine Kommunikationsverbindung zum Computernetz hergestellt.

## Patentansprüche

1. Verfahren zum Herstellen einer Kommunikationsverbindung zwischen einem Endgerät in einem ersten Kommunikationsnetz in Form eines Telekommunikationsnetzes und einem Endgerät in einem zum ersten Kommunikationsnetz unterschiedlichen zweiten Kommunikationsnetz in Form eines Computemetzes, wobei an der Netzgrenze zwischen dem ersten und dem zweiten Kommunikationsnetz ein Gateway zur Herstellung der Verbindung zwischen den verschiedenen Kommunikationsnetzen vorgesehen ist, **gekennzeichnet durch** folgende, von dem Gateway durchgeführte Schritte:
a) Empfangen einer numerischen Adresskennung, die in der für das erste Kommunikationsnetz typischen Weise aufgebaut ist, aufweisend Adresskennungsbestandteile mit jeweils zweiziffrigen Zahlencodes, die für das erste Kommunikationsnetz gültig ist, nicht jedoch für das zweite Kommunikationsnetz, aus dem ersten Kommunikationsnetz;
b) Zugreifen auf eine Umwandlungsdatei, in der numerischen Adresskennungsbestandteilen in Form von zweiziffrigen Zahlencodes des ersten Kommunikationsnetzes alphanumerische Adresskennungsbestandteile, aufweisend Adresskennungsbestandteile in Form von Buchstaben und/oder Sonderzeichen des zweiten Kommunikationsnetzes eindeutig zugeordnet sind wobei jeweils einem zweiziffrigen Zahlencode jeweils ein Buchstabe oder Sonderzeichen zugeordnet ist;
c) Automatisches Umwandeln der Bestandteile der Adresskennung des ersten Kommunikationsnetzes in eine Adresskennung für das zweite Kommunikationsnetz anhand der Umwandlungsdatei;
d) Herstellen der Kommunikationsverbindung zwischen den Endgeräten über die umgewandelte Adresskennung.

2. Verfahren nach Anspruch 1, **dadurch gekennzeichnet, dass** mit diesem eine Verbindung vom ersten Kommunikationsnetz zum zweiten Kommunikationsnetz und/oder eine Verbindung vom zweiten Kommunikationsnetz zum ersten Kommunikationsnetz hergestellt wird/werden.

3. Verfahren nach einem der Ansprüche 1 oder 2, **dadurch gekennzeichnet, dass** das Gateway eine aus zwei Bestandteilen bestehende numerische Adresskennung des ersten Kommunikationsnetzes empfängt, wobei ein Bestandteil eine Anwahlkennung für das Gateway und der andere Bestandteil spezifische Kenndaten zur Erreichung eines Teilnehmers des zweiten Kommunikationsnetzes umfasst, und dass das Gateway zur Herstellung der Kommunikationsverbindung die spezifischen Kenndaten umwandelt.

4. Gateway zum Herstellen einer Kommunikationsverbindung zwischen einem Endgerät in einem ersten Kommunikationsnetz in Form eines Telekommunikationsnetzes und einem Endgerät in einem zum ersten Kommunikationsnetz unterschiedlichen zweiten Kommunikationsnetz in Form eines Computernetzes, wobei das Gateway an der Netzgrenze zwischen dem ersten und dem zweiten Kommunikationsnetz zur Herstellung der Verbindung zwischen den verschiedenen Kommunikationsnetzen angeordnet ist, **gekennzeichnet durch** eine Empfangseinrichtung zum Empfangen einer numerischen Adresskennung, aufweisend Adresskennungsbestandteile mit jeweils zweiziffrigen Zahlencodes, die für das erste Kommunikationsnetz gültig ist, nicht jedoch für das zweite Kommunikationsnetz, aus dem ersten Kommunikationsnetz, eine Zugriffseinrichtung zum Zugreifen auf eine Umwandlungsdatei, in der numerischen Adresskennungsbestandteilen in Form von zweiziffrigen Zahlencodes des ersten Kommunikationsnetzes alphanumerische Adresskennungsbestandteile, aufweisend Buchstaben und/oder Sonderzeichen, des zweiten Kommunikationsnetzes eindeutig zugeordnet sind, wobei jeweils einem zweiziffrigen Zahlencode jeweils ein Buchstabe oder Sonderzeichen zugeordnet ist. Mittel zum automatischen Umwandeln der Bestandteile der numerischen Adresskennung des ersten Kommunikationsnetzes in eine alphanumerische Adresskennung für das zweite Kommunikationsnetz anhand der Umwandlungsdatei und Mittel zum Herstellen der Kommunikationsverbindung zwischen den Endgeräten über die umgewandelte Adresskennung.

5. Gateway nach Anspruch 4, **dadurch gekennzeichnet, dass** das Gateway eine Analyseeinrichtung zum Analysieren der Adresskennung aufweist, wobei ein Bestandteil der Adresskennung eine Anwahlkennung für das Gateway und der andere Bestandteil der Adresskennung spezifische Kenndaten zur Erreichung eines Teilnehmers des zweiten Kommunikationsnetzes umfasst, dass die Analyseeinrichtung Mittel zum Erkennen der Anwahlkennung oder der spezifischen Kenndaten aufweist, und dass die Mittel zum automatischen Umwandeln zum Umwandeln der spezifischen Kenndaten in eine Adresskennung für das zweite Kommunikationsnetz anhand der Umwandlungsdatei ausgebildet sind.

6. Gateway nach Anspruch 4 oder 5, **dadurch gekennzeichnet, dass** dieses Bestandteil des ersten Kommunikationsnetzes und/oder dass dieses Bestandteil des zweiten Kommunikationsnetzes ist.

7. Gateway nach einem der Ansprüche 4 bis 6, **dadurch gekennzeichnet, dass** die Umwandlungsdatei Bestandteil des Gateways ist.

## Claims

1. Method for creating a communications connection between a terminal device in a first communications network in the form of a telecommunications network and a terminal device in a second communications network in the form of a computer network which is different from the first communications network, wherein a gateway is provided, at the network interface between the first and second communications networks, for creating the connection between the different communications networks, **characterised by** the following steps carried out by the gateway:
a) receiving, from the first communications network, a numeric address identifier which is constructed in the manner typical of the first communications network, comprising address identifier components each having two-digit numeric codes, which is valid for the first communications network, but not for the second communications network;
b) accessing a conversion file in which alphanumeric address identifier components comprising address identifier components in the form of letters and/or special symbols of the second communications network are clearly assigned to numeric address identifier components in the form of two-digit numeric codes of the first communications network, each two-digit numeric code having one letter or special symbol assigned thereto;
c) automatically converting the components of the address identifier of the first communications network into an address identifier for the second communications network by means of the conversion file;
d) creating the communications connection between the terminal devices via the converted address identifier.

2. Method according to claim 1, **characterised in that** a connection from the first communications network to the second communications network and/or a connection from the second communications network to the first communications network is/are created thereby.

3. Method according to one of claims 1 or 2, **characterised in that** the gateway receives a numeric address identifier of the first communications network consisting of two components, one component comprising a selection identifier for the gateway and the other component comprising specific characteristic data for reaching a subscriber of the second communications network, and the gateway converts the specific characteristic data to create the communications connection.

4. Gateway for creating a communications connection between a terminal device in a first communications network in the form of a telecommunications network and a terminal device in a second communications network, in the form of a computer network, different from the first communications network, the gateway being arranged at the network interface between the first and second communications networks, in order to create the connection between the different communications networks, **characterised by** a receiving device for receiving, from the first communications network, a numeric address identifier comprising address identifier components with two-digit numeric codes in each case, which is valid for the first communications network but not for the second communications network, an access device for accessing a conversion file in which alphanumeric address identifier components of the second communications network comprising letters and/or special symbols are clearly assigned to numeric address identifier components of the first communications network in the form of two-digit numeric codes, each two-digit numeric code having one letter or special symbol assigned thereto, means for automatically converting the components of the numeric address identifier of the first communications network into an alphanumeric address identifier for the second communications network by means of the conversion file, and means for creating the communications connection between the terminal devices via the converted address identifier.

5. Gateway according to claim 4, **characterised in that** the gateway comprises an analyser for analysing the address identifier, one component of the address identifier comprising a selection identifier for the gateway and the other component of the address identifier comprising specific characteristic data for reaching a subscriber to the second communications network, **in that** the analyser comprises means for recognising the selection identifier or the specific characteristic data, and **in that** the automatic converting means are embodied to convert the specific characteristic data into an address identifier for the second communications network using the conversion file.

6. Gateway according to claim 4 or 5, **characterised in that** this is a component of the first communications network and/or this is a component of the second communications network.

7. Gateway according to one of claims 4 to 6, **characterised in that** the conversion file is a component of the gateway.

## Revendications

1. Procédé servant à établir une liaison de communication entre un terminal dans un premier réseau de communication sous la forme d'un réseau de télécommunication et un terminal dans un deuxième réseau de communication, différent du premier réseau de communication, sous la forme d'un réseau informatique, sachant qu'une passerelle servant à établir la liaison entre les divers réseaux de communication est prévue à la limite du réseau entre le premier réseau de communication et le deuxième réseau de communication, **caractérisé par** les étapes suivantes exécutées par la passerelle, consistant à :
a) recevoir en provenance du premier réseau de communication un identifiant d'adresse numérique, doté d'une structure typique pour le premier réseau de communication, présentant des composants d'identifiant d'adresse dotés respectivement de codes numériques à deux chiffres, qui est valable pour le premier réseau de communication, qui n'est en revanche pas valable pour le deuxième réseau de communication ;
b) accéder à un fichier de conversion, dans lequel des composants alphanumériques d'identifiant d'adresse, présentant des composants d'identifiant d'adresse sous la forme de lettre et/ou de signes particuliers du deuxième réseau de communication sont clairement associés à des composants d'identifiant d'adresse numériques sous la forme de codes numériques à deux chiffres du premier réseau de communication, sachant que respectivement une lettre ou un signe particulier est associé(e) à respectivement un code numérique à deux chiffres ;
c) convertir de manière automatique les composants de l'identifiant d'adresse du premier réseau de communication en un identifiant d'adresse pour le deuxième réseau de communication à l'aide du fichier de conversion ;
d) établir la liaison de communication entre les terminaux par l'intermédiaire de l'identifiant d'adresse converti.

2. Procédé selon la revendication 1, **caractérisé en ce qu'**à l'aide dudit procédé, une liaison est établie depuis le premier réseau de communication vers le deuxième réseau de communication, et/ou **en ce qu'**une liaison est établie depuis le deuxième réseau de communication vers le premier réseau de communication.

3. Procédé selon l'une quelconque des revendications 1 ou 2, **caractérisé en ce que** la passerelle reçoit un identifiant d'adresse numérique, constitué des deux composants, du premier réseau de communication, sachant qu'un composant comprend un identifiant de sélection pour la passerelle et que l'autre composant comprend des données caractéristiques spécifiques servant à atteindre un abonné du deuxième réseau de communication, et **en ce que** la passerelle servant à établir la liaison de communication convertit les données caractéristiques spécifiques.

4. Passerelle servant à établir une liaison de communication entre un terminal dans un premier réseau de communication sous la forme d'un réseau de télécommunication et un terminal dans un deuxième réseau de communication, différent du premier réseau de communication, sous la forme d'un réseau informatique, sachant que la passerelle est disposée au niveau de la limite de réseau entre le premier réseau de communication et le deuxième réseau de communication afin d'établir la liaison entre les divers réseaux de communication, **caractérisée par** : un dispositif de réception servant à recevoir en provenance du premier réseau de communication un identifiant d'adresse numérique, présentant des composants d'identifiant d'adresse dotés respectivement de codes numériques à deux chiffres, lequel identifiant d'adresse numérique est valable pour le premier réseau de communication, n'est en revanche pas valable pour le deuxième réseau de communication ; par un dispositif d'accès servant à accéder à un fichier de conversion, dans lequel des composants alphanumériques d'identifiant d'adresse, présentant des lettres et/ou des signes particuliers, du deuxième réseau de communication sont clairement associés à des composants numériques d'identifiant d'adresse sous la forme de codes numériques à deux chiffres, sachant que respectivement une lettre ou un signe particulier est associé(e) à respectivement un code numérique à deux chiffres ; par des moyens servant à convertir de manière automatique les composants de l'identifiant d'adresse numérique du premier réseau de communication en un identifiant d'adresse alphanumérique pour le deuxième réseau de communication à l'aide du fichier de conversion ; et par des moyens servant à établir la liaison de communication entre les terminaux par l'intermédiaire de l'identifiant d'adresse converti.

5. Passerelle selon la revendication 4, **caractérisée en ce que** la passerelle présente un dispositif d'analyse servant à analyser l'identifiant d'adresse, sachant qu'un composant de l'identifiant d'adresse comprend un identifiant de sélection pour la passerelle et que l'autre composant de l'identifiant d'adresse comprend des données caractéristiques spécifiques servant à atteindre un abonné du deuxième réseau de communication, **en ce que** le dispositif d'analyse présente des moyens servant à identifier l'identifiant de sélection ou les données caractéristiques spécifiques, et **en ce que** les moyens de conversion automatique sont réalisés pour convertir les données caractéristiques spécifiques en un identifiant d'adresse pour le deuxième réseau de communication à l'aide du fichier de conversion.

6. Passerelle selon la revendication 4 ou 5, **caractérisée en ce que** ladite passerelle fait partie intégrante du premier réseau de communication, et/ou **en ce qu'**elle fait partie intégrante du deuxième réseau de communication.

7. Passerelle selon l'une quelconque des revendications 4 à 6, **caractérisée en ce que** le fichier de conversion fait partie intégrante de la passerelle.
